# EUROPEAN PATENT SPECIFICATION

(11) **EP 2 307 323 B1**
(45) Date of publication and mention of the grant of the patent: **23.05.2012**
(21) Application number: 09710619.9
(22) Date of filing: 13.02.2009
(51) Int. Cl.: C02F 3/06, C02F 3/00, C02F 3/20

(54) **PLANT AND PROCESS FOR THE PURIFICATION OF WASTEWATERS**
ANLAGE UND VERFAHREN ZUR REINIGUNG VON ABWÄSSERN
INSTALLATION ET PROCÉDÉ PERMETTANT LA PURIFICATION D' EAUX USÉES

(30) Priority: 15.02.2008 IT MI20080243
(43) Date of publication of application: 13.04.2011
(73) Proprietor: C.S.A. S.r.l., 20124 Milano (IT)
(72) Inventor: BARGNA, Renato, I-22063 Cantù CO (IT)
(74) Representative: Pistolesi, Roberto
(86) International application number: PCT/EP2009/051692
(87) International publication number: WO 2009/101168

(56) References cited:
- EP-A1- 1 081 100
- US-A- 4 680 111
- US-A- 5 423 988
- US-A- 5 534 148
- US-A- 5 954 963

## Description

The present invention concerns a plant and a process for a new kind of biological treatment for civil and industrial wastewaters purification.

It is known that activated sludge processes are the most diffused among the biological systems of wastewaters purification. In such processes the organic substances (BOD) and nitrogen removal occurs under the combined action of oxygen and/or nitrates and activated sludge, namely a suspension of biomass in water.

There are many different activated sludge plants and related processes, but basically they consist of one or more reaction tanks, aerated or not, and a settling tank in which the sludge, separated by the purified water, is recycled to the reaction tanks. Steady-state conditions are obtained by wasting a certain amount of sludge from the final clarifier.

The main drawback of the activated sludge plants and processes is related to the physical nature of the sludge that, being made-up by light flocs, cannot reach high concentrations inside the reaction tanks.

For this reason such known activated sludge plants and processes are characterized by low treatment capacity and, therefore, in order to fulfil the required legislation, large plants are needed with consequent costs and the impact of the environment. Further the sludge's separation from the purified effluents needs large sized settling tank. Finally, it is well known that activated sludge processes are negatively characterised by high sludge production, whose treatment costs are high and disposal in the environment creates additional problems.

To overcome such problems, in the late 1980s and early 1990s, submerged aerated fixed film reactors have been realized: in these systems the attachment to solid surface is the basis for biomass accumulation. Although several process configurations are employed, they essentially consist of high units filled with support materials for biomass attachment (biofilters) and equipped with sophisticated devices for aeration. The support materials are normally constituted by plastic and expanded clay particles with both high porosity and specific surface, thus obtaining high biomass concentration and, consequently, compact plants.

The air is injected to the base of the biofilter and flows in co-current (air and water traveling in the same direction in the so-called up-flow biofilters) or in countercurrent (air and water traveling in the opposite direction in the so-called down-flow biofilters). These characteristics are essential to achieving high oxygen-transfer efficiency.

US-A-595493 discloses a method for biologically purifying water containing dissolved oxygen removable by biological treatment by adding a sulfur-containing oxygen scavenger. The biomass carrier media provides void spaces large enough to prevent the biomass from bridging between the media surfaces and thereby plugging the media. It also provides a high bulk void volume which facilitates water flow and water retention within media bed.

However, biofiltration has also serious drawbacks that are limiting its use. All kind of biofilters, in fact, need frequent backwashing to remove the retained solids accumulated during the operating period. Roughly daily backwashing is needed, and this involves high sludge production and extra volume capacity to use as water storage units.

Moreover, the elevated frequency of backwashing does not allow the biomass to assume compact structure, and actually it results soft and easy to detach itself from the support material. The weak physical characteristics of the biomass heavily reduce the time of the operating period which can be increase only with an efficient suspended solids removal to be obtained in a pre-treatment unit. In doing so, however, the result is a further increase of both sludge production and system complexity.

Finally, the reliability of the devices for air injection, that is the critical point for the biofilters performance, is very often jeopardized by clogging problems due to suspended solid present in the wastewater.

The purpose of the present invention is therefore to provide a plant and a process for the purification of civil and industrial wastewaters, which is free from such drawbacks. This purpose is achieved with a plant whose principal characteristics are specified in the first claim and a process whose principal characteristics are specified in the claim 10. Other characteristics of the plant and the process according to the present invention are specified in the remaining claims.

A first advantage of the plant according to the present invention, consists in the fact that the air is injected in a unit different from the biofilter, so avoiding the installation of complex devices that are subject to the frequent problems of clogging as described above. In the present invention, the air is injected in a simple and economic way directly in the aeration tank, and from here, to the biofilter via the recycle stream where it is also possible to add pure gaseous oxygen to increase the efficiency and the potentiality of the plant.

A second advantage of the plant according to the present invention, is related to the use of support materials with peculiar features that allows the bacteria to growth in strong aggregates having elevated density and compactness with consequent high stability inside the biofilter. This makes it possible to significantly increase the operating period, with consequent reduction of the backwashing frequency, up to twenty times in comparison to the traditional biofilters. The backwashing, when necessary, can be performed in a simplified manner with only air under pressure without the voluminous water storage units necessary in the conventional biofilters. Further, the high concentration of the biomass inside the biofilter, due to the low backwashing frequency, results in a very low sludge production with significant reduction of the costs associated to its treatment and disposal.

Another advantage of the process of the present invention consists in the fact that is possible to purify at reduced costs industrial wastewater containing high concentration of biorefractory compounds. In fact, thanks to the discontinuity of the process, it is possible to insert an ozonization phase inside the biological one, thus saving ozone consumption. In the present invention ozone, added to the recirculation flow, can be opportunely dosed in quantity and in selected temporal instants so that its main effect is the increase the biodegradability of the biorefractory substances and not their complete mineralization.

Further advantages and characteristics of the plant and the process of the present invention will become evident to the experts of the sector from the following and nonlimiting description of an embodiment thereof with reference to the attached drawings in which:
- figure 1 shows a schematic simplified view of the purification plant according to such an embodiment of the present invention; and
- figure 2 shows a detailed view of a perforated plate, arranged inside the biofilter in a lower portion thereof.

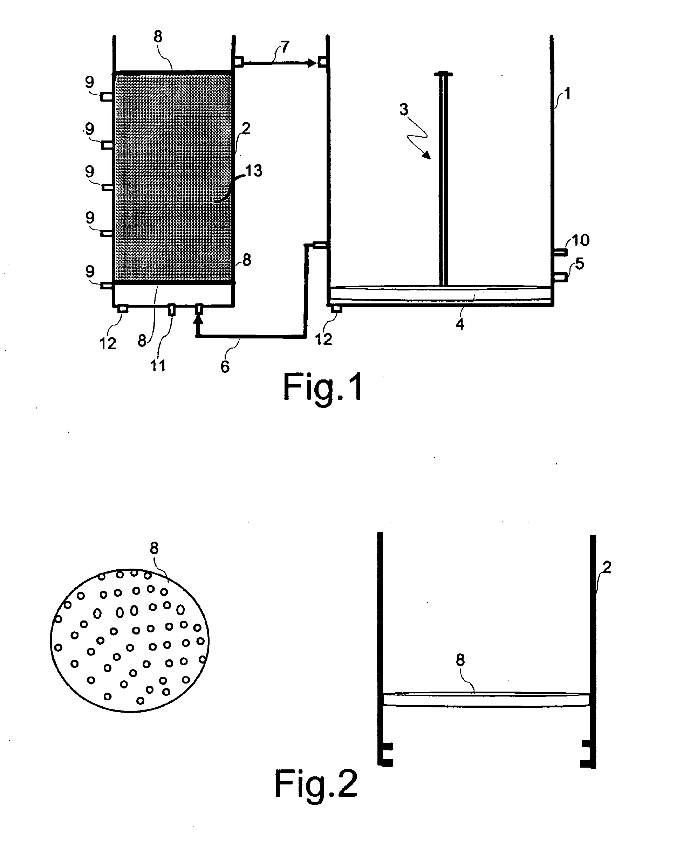

Referring to figure 1, the plant according to the present invention comprises at least one aeration tank 1 and a biofilter 2.

The aeration tank 1 is provided with a device 3 for the air injection, e.g. of the type of fine bubble with porous diffusers 4 placed in the lower portion of the aeration tank 1, connected through an opportune pipeline to a compressor (not shown).

In the lower portion of the aeration tank 1 a pipeline 5 is inserted, through which a feeding pump (not represented), introduces the wastewaters to be purified.

The biofilter 2 is placed alongside the aeration tank 1 and is connected thereto through two pipelines 6 and 7, suitable to allow the circulation of the wastewaters under purification from aeration tank 1 to biofilter 2 and vice versa. The pipelines 6 and 7 are placed in a way to guarantee an ascending flow of the wastewaters in the biofilter 2, and so to realize an up-flow biofilter. In particular, the pipeline 6 enters into the lower portion of the biofilter 2 while the pipeline 7 connects the upper portion of the biofilter with the aeration tank 1.

Waters are moved in the pipeline 6 by means of a pump (not represented), while in the pipeline 7 they flow by gravity.

In proximity to the connection to biofilter 2 the pipeline 6 is equipped with a valve to allows possible gas additions to the wastewaters under treatment. For example, through this valve the wastewaters in transit can advantageously be enriched in oxygen or in ozone.

Inside the biofilter 2 are placed support materials 13 for the growth and the development of the biomass. Such support materials, represented in the figure by a small spherical filling, are preferably plastic material units packaged randomly, having a porosity in the range 0.6-0.8 and a void size between 50 and 80 mm³. The use of such materials facilitates the development of a biomass having the desired characteristics of stability in the reactor.

The support materials are held inside the biofilter 2 by suitable plates 8 having holes uniformly distributed all over their area, as shown in detail in figure 2.

The biofilter 2 is also provided with a system for the measure of head losses. This system comprises a plurality of probes 9 arranged at different heights of biofilter 2. The probes 9 give good information on the biomass distribution along the bed, and help to establish when it is necessary to perform the backwashing and its intensity.

A pipeline 10 is provided with a motorized valve (not shown) that allows the purified effluent to be unloaded by gravity from the aeration tank 1.

A pipeline 11, also provided with a suitable valve, is placed in the lower portion ofbiofilter 2 to allow the entry of compressed air during the backwashing.

The aeration tank 1 is equipped with sensors of level (not shown) suitable to measure the degree of filling of the tank.

Inside the biofilter 2 are placed analytical sensors for the measurement of the following physical and chemical parameters whose on line measurement allows a optimal control for the efficient operation of the plant: pH, DO, N-NH₄, N-NO₃.

The aeration tank 1 and the biofilter 2 are provided with service valves 12, to allow the immediate emptying of the units in case of necessity.

The plant according to the invention allows to carry out a discontinuous process, wherein civil or industrial wastewaters are circulated between the aeration tank 1 and the biofilter 2. The process is characterized by a series of operation phases each lasting for a defined period of time. Overall control of the system is accomplished with level sensors and a timing device or microprocessor. Operation phases following each other during one cycle are:
a) Aerated filling of the wastewaters inside the tank 1: The civil or industrial wastewaters to be purified are sent, through the feed pump and through the pipeline 5, in the lower portion of the aeration tank 1. A first sensor of level registers when the first preset volume is reached, at this point the wastewaters starts to be aerated through the device 3, 4. When the waters reach a second preset level, greater than the first, a second sensor of level sends a signal to the microprocessor that switches off the feed pump.
b) Biological oxidation of the wastewaters inside the biofilter 2: The recycling pump is activated, and the wastewaters aerated inside the aeration tank 1 are continuously transferred to the biofilter 2 through the pipeline 6, and from the biofilter 2 retransferred to the aeration tank 1 through the pipeline 7. In the biofilter 2 biological oxidation takes place. In the aeration tank 1, the device 3 for the injection of air is in operation during the aerobic period of the phase, or switched off during the anoxic period.
c) Discharge of the purified waters: Once the desired degree of purification is reached, the transfer of the waters between the aeration tank 1 and the biofilter 2 is interrupted and the treated waters is unloaded by gravity from the pipeline 10 of the aeration tank 1.

After a certain number of cycles and when a determined head loss in the biofilter 2 is registered, the system needs to be washed. The backwashing is carried out in a simple and effective way by introducing air under pressure through the special pipeline 11.

In the case of application of this technology to industrial wastewater at elevated toxicity and low biodegradability, the oxidation phase of the process can be carried out, at least partially, in the presence of ozone. In this case the ozone is discontinuously introduced in the biofilter 2 by injection in the pipeline 6 that transfers the wastewaters from the tank 1 to the biofilter 2. In this way it facilitates the transformation of biorefractory substances, eventually contained in the wastewaters, in biodegradable ones, that will then be removed in the final part of the phase.

With high strength wastewaters, the oxidation phase can also include pure oxygen addition, again by injection in the pipeline.

## Claims

1. A plant for the purification of civil or industrial wastewaters comprising a biofilter (2) containing support materials (13) for a biomass, an aeration tank (1) equipped with an air injection device (3) and connected to said biofilter (2) through pipelines (6, 7) suitable to allow the recycle of the wastewaters from said tank (1) to said biofilter (2) and vice versa, **characterized in that** said support materials (13 are formed of units having a porosity comprised between 0.6-0.8 and a void size comprised between 50 and 80 mm³.

2. A plant according to the preceding claim, **characterized in that** said pipelines (6, 7) are so arranged to ensure an ascending flow of the wastewaters in said biofilter (2).

3. A plant according to the preceding claim, **characterized in that** said support materials (13) are formed of units made of a plastic material, said units being randomly packed.

4. A plant according to any one of the preceding claims, **characterized in that** said support materials (13) are held inside the biofilter (2) by means of plates (8) provided with uniformly distributed holes.

5. A plant according to any one of the preceding claims, **characterized in that** in said aeration tank (1) pipelines (5, 10) are inserted for the supply and the discharge of wastewaters.

6. A plant according to any one of the preceding claims, **characterized in that** a pipeline (11) for compressed air is connected to a lower portion of said biofilter (2).

7. A plant according to any one of the preceding claims, **characterized in that** one of the pipelines (6), suitable to allow the circulation of the wastewaters from said tank (1) to said biofilter (2), is provided with a valve suitable to allow gas additions to the wastewaters under treatment.

8. A plant according to any one of the preceding claims, **characterized in that** said biofilter. (2) is provided with a system for the measure of head losses, the system comprising a plurality of probes (9) arranged at different heights of the biofilter (2).

9. A plant according to any one of the preceding claims, **characterized in that** inside the biofilter (2) sensors are placed for the measure of one or more physical and chemical parameters chosen among pH, DO, N-NH₄, N-NO₃.

10. A discontinuous process for the purification of civil or industrial wastewaters by means of a plant according to any of the preceding claims.

11. A process according to claim 10, **characterized in that** said wastewaters are subject to the phases of:
a) aerated filling of the wastewaters inside the tank (1);
b) biological oxidation of the wastewaters inside the biofilter (2), where said wastewaters are circulated between said aeration tank (1) and said biofilter (2); and
c) discharge of the purified waters.

12. A process according to claim 11, **characterized in that** the wastewaters are subject to a number of cycles comprising phases a), b) and c).

13. A process according to claim 11, **characterized by** comprising a phase of backwashing said biofilter (2), that is performed when a determined head loss in the biofilter (2) is reached.

14. A process according to the preceding claim, **characterized in that** such backwashing is performed by introducing air under pressure in a lower portion of the biofilter (2).

15. A process according to claim 11, **characterized in that** phase b) is performed at least partially in the presence of ozone.

16. A process according to claim 11, **characterized in that** phase b) is performed at least partially in the presence of pure gaseous oxygen.

17. A process according to claim 11, **characterized by** further comprising a phase of interrupting the aeration.

## Patentansprüche

1. Eine Anlage für die Klärung ziviler oder industrieller Abwässer, bestehend aus einem Biofilter (2), beinhaltend Stützmittel (13) für eine Biomasse, eine Belüftungswanne (1), die mit einer Vorrichtung für die Insufflation von Luft (3) ausgestattet und mit dem genannten Biofilter (2) über Rohre (6, 7) verbunden, welche den Kreislauf der Abwässer von der genannten Wanne (1) zum genannten Biofilter (2) und umgekehrt zu ermöglichen, **dadurch gekennzeichnet, dass** die genannten Stückmittel (13) aus Elementen gebildet sind, die eine Porosität innerhalb des Intervalls von 0,6 und 0,8 und Größenordnungen der Leerräume zwischen 50 und 80 mm³ aufweisen.

2. Anlage nach dem vorherigen Anspruch, **gekennzeichnet dadurch dass** die genannten Rohre (6,7) so angeordnet sind, dass ein aufsteigender Fluss der Abwässer in den genannten Biofilter (2) gewährleistet wird.

3. Anlage nach dem vorherigen Anspruch, **dadurch gekennzeichnet, dass** diese Stützmittel (13) aus Kunststoff gebildet sind, die durcheinander verpackt sind.

4. Anlage nach einem der vorherigen Ansprüche, **dadurch gekennzeichnet, dass** die genannten Stützmittel (13) innerhalb des Bioflters 82) mithilfe von Platten (8) gehalten werden, die mit einheitlich verteilten Löchern ausgestattet sind.

5. Anlage nach einem der vorherigen Ansprüche, **dadurch gekennzeichnet, dass** in der genannten Belüftungswanne (1) Rohre (5, 10) für die Versorgung und den Auslass der Abwässer vorgesehen sind.

6. Anlage nach einem der vorherigen Ansprüche, **dadurch gekennzeichnet, dass** ein Druckluftrohr (11) mit einem unteren Teil des genannten Biofilters (2) verbunden ist.

7. Anlage nach einem der vorherigen Ansprüche, **dadurch gekennzeichnet, dass** eines der Rohre (6), das den Kreislauf des Abwassers von der genannten Wanne (1) zum genannten Biofilter (2) ermöglicht, mit einem Ventil ausgestattet ist, das die Möglichkeit bietet, zu den behandelten Abwässern Gas hinzuzufügen.

8. Anlage nach einem der vorherigen Ansprüche, **dadurch gekennzeichnet, dass** der genannte Biofilter (2) mit einem Messungssystem für die Ladungsverluste ausgestattet ist, welcher verschiedene Sonden (9) aufweist, die an verschiedenen Höhen des Biofilters (2) angeordnet sind.

9. Anlage nach einem der vorherigen Ansprüche, **dadurch gekennzeichnet, dass** im Biofilter (2) Sensoren für die Erhebung einer oder mehrerer ausgewählter Parameter unter pH, DO, N-NH₄, N-NO₃ angeordnet sind.

10. Diskontinuierliches Verfahren für die Klärung ziviler oder industrieller Abwässer über eine Anlage nach einem der vorherigen Ansprüche.

11. Verfahren nach Anspruch 10, **dadurch gekennzeichnet, dass** die genannten Abwässer den folgenden Phasen unterzogen werden:
a) Belüftete Versorgung der Abwässer innerhalb der Wanne (1);
b) Biologische Oxydierung der Abwässer innerhalb des Biofilters (2), wobei die genannten Abwässer zwischen der genannten Belüftungswanne (1) und dem genannten Biofilter (2) zyklisch bewegt werden; und
c) Auslauf der gereinigten Gewässer.

12. Verfahren nach Anspruch 11, **dadurch gekennzeichnet, dass** die Abwässer verschiedenen Zyklen, welche die Phase a), b) und c) einschließen, unterzogen werden.

13. Verfahren nach Anspruch 11, **dadurch gekennzeichnet, dass** es eine Phase der Gegenwaschung des genannten Biofilters (2) einschließt, die bei der Erreichung eines bestimmten Verlustes der Ladung im Biofilter (2) durchgeführt wird.

14. Verfahren nach dem vorherigen Anspruch, **dadurch gekennzeichnet, dass** diese Gegenwaschung durchgeführt wird, indem man Pressluft in einen unteren Teil des Biofilters (2) einführt.

15. Verfahren nach Anspruch 11, **dadurch gekennzeichnet, dass** die Phase b) mindestens zum Teil bei Vorhandensein von Ozon durchgeführt wird.

16. Verfahren nach Anspruch 11, **dadurch gekennzeichnet, dass** die Phase b) mindestens zum Teil bei Vorhandensein von reinem, gasförmigem Sauerstoff durchgeführt wird.

17. Verfahren nach Anspruch 11, des Weiteren **dadurch gekennzeichnet, dass** es eine Unterbrechungsphase der Belüftung einschließt.

## Revendications

1. Un système d'épuration des eaux résiduaires urbaines ou industrielles, constitué par un biofiltre (2) contenant moyens de support (13) pour une biomasse, une cuve d'aération (1) équipée d'un dispositif d'insufflation d'air (3) et raccordée au dit biofiltre (2) au moyen de canalisations (6, 7) aptes à permettre la circulation des eaux résiduaires de la dite cuve (1) au dit biofiltre (2) et inversement, **caractérisé par le fait que** les dits moyens de support (13) sont formés d'éléments ayant des porosités comprises dans une plage de 0,6-08 et des dimensions des vides comprises entre 50 et 80 mm³.

2. Un système selon la revendication précédente, **caractérisé par le fait que** les dites canalisations (6,7) sont disposés de façon à assurer un flux ascendant des eaux sales dans le dit biofiltre (2).

3. Un système selon la revendication précédente, **caractérisé par le fait que** les dits moyens de support (13) sont formés d'éléments en matière plastique, conditionnés en vrac.

4. Un système selon l'une quelconque des revendications précédentes, **caractérisé par le fait que** les dits moyens de support (13) sont maintenus à l'intérieur du biofiltre (2) au moyen de plaques (8) dotées d'orifices uniformément distribués.

5. Un système selon l'une quelconque des revendications précédentes, **caractérisé par le fait que** dans la dite cuve d'aération (1) se branchent des canalisations (5, 10) pour l'alimentation et pour l'évacuation des eaux résiduaires.

6. Un système selon l'une quelconque des revendications précédentes, **caractérisé par le fait qu'**une canalisation pour l'air comprimé (11) est raccordée à une portion inférieure du dit biofiltre (2).

7. Un système selon l'une quelconque des revendications précédentes, **caractérisé par le fait que** une des canalisations (6), apte à permettre la circulation des eaux résiduaires de la dite cuve (1) au dit biofiltre (2), est dotée d'une valve apte à permettre des adjonctions de gaz dans les eaux résiduaires en traitement.

8. Un système selon l'une quelconque des revendications précédentes, **caractérisé par le fait que** le dit biofiltre (2) est doté d'un système de mesures de pertes de charge, constitué par un grand nombre de détecteurs (9) disposés à différentes hauteurs du biofiltre (2).

9. Un système selon l'une quelconque des revendications précédentes, **caractérisé par le fait que** à l'intérieur du biofiltre (2) sont disposés des capteurs de détection d'un ou plusieurs paramètres choisis entre pH, DO, N-NH₄, N-NO₃.

10. Un procédé discontinu d'épuration des eaux résiduaires urbaines ou industrielles au moyen d'un système selon l'une des revendications précédentes.

11. Un procédé selon la revendication 10, **caractérisé par le fait que** les dites eaux sales sont soumises aux phases suivantes:
a) alimentation aérée des eaux résiduaires à l'intérieur de la cuve (1);
b) oxydation biologique des eaux résiduaires à l'intérieur du biofiltre (2), où les dites eaux résiduaires circulent entre la dite cuve (1) d'aération et le dit biofiltre (2); et
c) évacuation des eaux épurées.

12. Un procédé selon la revendication 11, **caractérisé par le fait que** le eaux résiduaires sont soumises à différents cycles comprenant les phases a), b) et c).

13. Un procédé selon la revendication 11, **caractérisé par le fait qu'**il comprend une phase de contre-lavage du dit biofiltre (2) qui se déclenche quand est atteinte une perte de charge donnée dans le biofiltre (2).

14. Un procédé selon la revendication précédente, **caractérisé par le fait que** ce contre-lavage est effectué en introduisant de l'air sous pression dans une portion inférieure du biofiltre (2).

15. Un procédé selon la revendication 11, **caractérisé par le fait que** la phase b) est effectuée au moins partiellement en présence d'ozone.

16. Un procédé selon la revendication 11, **caractérisé par le fait que** la phase b) est effectuée au moins partiellement en présence d'oxygène gazeux pur.

17. Un procédé selon la revendication 11, caractérisé aussi par le fait qu'il comprend une phase d'interruption de l'aération.
